Europäisches Patentamt

European Patent Office

Office européen des brevets

(19)

(11) Veröffentlichungsnummer: **0 026 732**
**B1**

(12) **EUROPÄISCHE PATENTSCHRIFT**

(45) Veröffentlichungstag der Patentschrift:
09.02.83

(51) Int. Cl.³: **H 02 G 15/18**

(21) Anmeldenummer: 80730062.9

(22) Anmeldetag: 27.08.80

(54) **Kabelgarnitur mit metallischem Gehäuse.**

(30) Priorität: 28.09.79 DE 2939933

(43) Veröffentlichungstag der Anmeldung:
08.04.81 Patentblatt 81/14

(45) Bekanntmachung des Hinweises auf die Patenterteilung:
09.02.83 Patentblatt 83/6

(84) Benannte Vertragsstaaten:
AT CH FR GB IT LI NL SE

(56) Entgegenhaltungen:
DE-A-2 419 843
DE-A-2 726 403
DE-B-1 665 218
DE-B-2 726 402

(73) Patentinhaber: SIEMENS AKTIENGESELLSCHAFT,
Berlin und München Wittelsbacherplatz 2,
D-8000 München 2 (DE)

(72) Erfinder: Goehlich, Lothar, Westphalweg 16B,
D-1000 Berlin 42 (DE)
Erfinder: Haug, Jürgen, Altonaer Strasse 7,
D-1000 Berlin 21 (DE)

BUNDESDRUCKEREI BERLIN

### Kabelgarnitur mit metallischem Gehäuse

#### 1. Anwendungsgebiet der Erfindung

Die Erfindung liegt auf dem Gebiet der Garnituren für kunststoffisolierte elektrische Kabel und ist bei der konstruktiven Ausgestaltung von vorgefertigten Garnituren oder Garniturenteilen mit einem elastischen Isolierkörper und metallischem Gehäuse anzuwenden.

#### 2. Stand der Technik

Für kunststoffisolierte Mittel- und Hochspannungskabel, insbesondere für solche mit einer Isolierung aus thermoplastischem oder vernetztem Polyäthylen, sind in neuerer Zeit Garnituren und Garniturenteile entwickelt worden, die auf das entsprechend vorbereitete Kabelende aufgeschoben werden oder in die entsprechend zubereiteten Kabelenden eingesteckt werden. Diese Garnituren und Garniturenteile bestehen im wesentlichen aus einem elastischen Isolierkörper aus einem Äthylen-Propylen-Terpolymer-Kautschuk oder Silikonkautschuk und sind mit Elementen zur Steuerung des elektrischen Feldes versehen. Ihre Innenbohrung ist kleiner als der Außendurchmesser der jeweils zubereiteten Kabelader. Beim Aufschieben auf die Kabelader oder beim Einstecken eines Kabelendes werden die Garniturenteile so weit elastisch gedehnt, daß sich ein hohlraumfreier Preßsitz auf der Aderisolierung ergibt.

Um derartige Garnituren und Garniturenteile berührungssicher auszubilden oder um eine metallische Durchverbindung der Kabelschirme zu ermöglichen, hat man metallische Gehäuse vorgesehen. Bei rohrförmiger Ausgestaltung des Gehäuses ist dabei zwischen dem Gehäuse und dem elastischen Isolierkörper eine kompressible Schaumstoffschicht oder ein zwischen elastischen Rippen angeordnetes Luftpolster vorgesehen, um eine Einengung der radialen elastischen Dehnbarkeit des Isolierkörpers zu vermeiden (DE-B-2 726 402, DE-A-2 726 403). Durch diese Maßnahmen wird aber der Wärmewiderstand der Garnitur als Ganzes vergrößert.

Bei einer anderen bekannten Kabelgarnitur dieser Art sitzt das metallische Gehäuse direkt auf dem aus elastischem Material bestehenden Isolierkörper auf. Hierbei ist aber kein Preßsitz der Kabelader im Isolierkörper vorgesehen, vielmehr besteht ein Abstand zwischen der Kabelader und der mit einem Metallrohr ausgekleideten Innenbohrung des Isolierkörpers (US-A-3 323 097).

An sich ist eine Kabelgarnitur in Form einer Verbindungsmuffe auf Gießharzbasis bekannt, bei der innerhalb des Gehäuses ein metallener Zylinder zur Durchverbindung der Kabelschirme angeordnet ist. Dieser Zylinder ist aus einem Stück Streckmetall geformt (DE-A-1 665 218). Die Durchbrechungen in dem Zylinder gewährleisten dabei eine Einbettung des Zylinders in den Gießharzkörper.

Weiterhin ist ein geschirmtes elektrisches Kabel bekannt, bei dem die Abschirmung aus einem Metallstreifen besteht, der durch sich hauptsächlich längs erstreckende schmale Löcher in eine Anzahl von durch querliegende Brücken verbundenen schmalen Bändern geteilt ist. Aufgrund der Perforierung ist es möglich, das Abschirmband ähnlich wie mehrere Einzeldrähte zu einem elektrischen Leiter zusammenzuziehen oder zu verdrehen (DE-A-2 419 843).

#### 3. Darstellung der Erfindung

##### a) Technische Aufgabe

Ausgehend von einer Garnitur für kunststoffisolierte elektrische Kabel, insbesondere Mittel- und Hochspannungskabel, die aus einem elastischen, vorgefertigten mit einer elastisch aufweitbaren Bohrung versehenen und gegebenenfalls ein Verbindungselement enthaltenden Isolierkörper mit einem rohrförmigen metallischen Gehäuse besteht, liegt der Erfindung die Aufgabe zugrunde, den Wärmewiderstand zwischen Isolierkörper und metallischem Gehäuse zu verringern, ohne dadurch die radiale elastische Dehnbarkeit des Isolierkörpers einzuengen.

##### b) Lösung der Aufgabe

Zur Lösung dieser Aufgabe ist gemäß der Erfindung vorgesehen, daß das rohrförmige Gehäuse aus Metallblech besteht und in direktem Kontakt mit dem Isolierkörper steht sowie parallel oder schräg zur Gehäuseachse ein- oder mehrfach geschlitzt ist.

##### c) Vorteile

Die gemäß der Erfindung vorgesehene geschlitzte Ausgestaltung des metallischen Gehäuses ermöglicht diesem eine radial elastische Verformung. Es kann damit auch den elastischen Durchmesseränderungen des Isolierkörpers bei Montage und Betrieb folgen. Demzufolge kann das metallische Gehäuse in direktem Kontakt mit dem Isolierkörper stehen, wodurch ein optimaler Wärmeübergangswiderstand gegeben ist. Schaumstoffzwischenschichten oder Luftpolster können entfallen; dadurch wird auch der Gesamtdurchmesser der Garnitur verringert.

##### d) Weitere Ausgestaltungen

Die radiale Elastizität des metallischen Gehäuses kann durch unterschiedliche Ausbildung der Schlitze erreicht oder auch in ihrer Größe beeinflußt werden. Beispielsweise kann das Gehäuse mit einem von einem zum anderen Ende durchgehenden Schlitz versehen sein. Dies könnte jedoch bei der Herstellung des Garniturenkörpers infolge der Instabilität des rohrförmigen Gehäuses zu Schwierigkeiten führen, insbesondere dann, wenn das metallische Gehäuse in den Isolierkörper eingebettet wird. Daher ist es zweckmäßig, wenn der oder die im Gehäuse vorgesehenen Schlitze ein- oder mehrfach unterbrochen sind. Beispielsweise bei Verbindungsmuffen wird man die Unterbrechungsstellen zweckmäßig etwa in der Mitte des Gehäuses vorsehen, weil dort die geringste elastische Dehnung erforderlich ist. In jedem Fall empfiehlt es sich, die Schlitze gleichmäßig am Umfang des rohrförmigen Gehäuses verteilt anzuordnen. Um eine gleichmäßige elastische Dehnbarkeit des Gehäuses über seine Länge sicherzustellen, kann man dabei so vorgehen, daß die Schlitzenden von in Umfangsrichtung des rohrförmigen Gehäuses nebeneinanderliegenden Schlitzen in Achsrichtung gegeneinander versetzt angeordnet sind.

Bei den erwähnten Ausgestaltungen des Gehäuses wird davon ausgegangen, daß dieses aus einem metallischen Rohr oder aus einem zu einem Rohr geformten Blechstreifen besteht oder auch aus tiefgezogenen, halbschalenartigen Teilen, die durch angeformte Laschen miteinander verbunden sein können. Man kann das Gehäuse aber auch aus mehreren Blechstreifen aufbauen, die mit Abstand zueinander angeordnet sind. Die gegenseitige Fixierung der Blechstreifen kann dabei mit Hilfe eines oder mehrerer metallischer Ringe erfolgen oder auch durch den Isolierkörper der Garnitur selbst gegeben sein.

Im Interesse einer möglichst homogenen Ausgestaltung des elektrischen Feldes im Bereich der Kabelgarnitur empfiehlt es sich, den oder die Schlitze im metallischen Gehäuse wenigstens auf der Innenseite des Gehäuses mittels eines elektrisch leitenden elastischen Kunststoffes elektrisch zu überbrücken. Dies erfolgt mit Vorteil mit Hilfe einer rohrförmigen, elektrisch leitenden Schicht. Wenn diese genügend dick und elastisch ausgebildet ist, kann sie auch die äußere Schicht des Isolierkörpers bilden und das metallische Gehäuse in Form einer Einbettung aufnehmen. Das rohrförmige metallische Gehäuse kann aber auch — insbesondere in Verbindung mit einer unterlegten elektrisch leitenden Schicht — in den Isolierkörper selbst eingebettet sein.

Im Hinblick auf ungünstige Umweltverhältnisse empfiehlt es sich, die Oberfläche des rohrförmigen metallischen Gehäuses mit einem Korrosionsschutz zu versehen. Dies kann eine spezielle Korrosionsschutzmasse oder auch eine einfache Kunststoffschicht sein, die gegebenenfalls elektrisch leitend ausgebildet ist. Weiterhin kommt eine Verklebung des rohrförmigen Gehäuses mit dem Isolierkörper mittels eines Haftvermittlers in Betracht. Dieser kann gegebenenfalls korrosionsschützende Eigenschaften haben.

Die gemäß der Erfindung vorgesehene Ausgestaltung der Kabelgarnitur ist nicht auf Garnituren mit durchgehender Achse beschränkt. Es kommen in gleicher Weise T-förmige Ausgestaltungen in Betracht, wie sie beispielsweise bei Abzweigmuffen notwendig sind, oder auch knieförmige Ausgestaltungen, wie sie beispielsweise zum steckbaren Anschluß von Kabeln an elektrische Geräte, wie beispielsweise Transformatoren, üblich sind.

### e) Ausführungsbeispiele

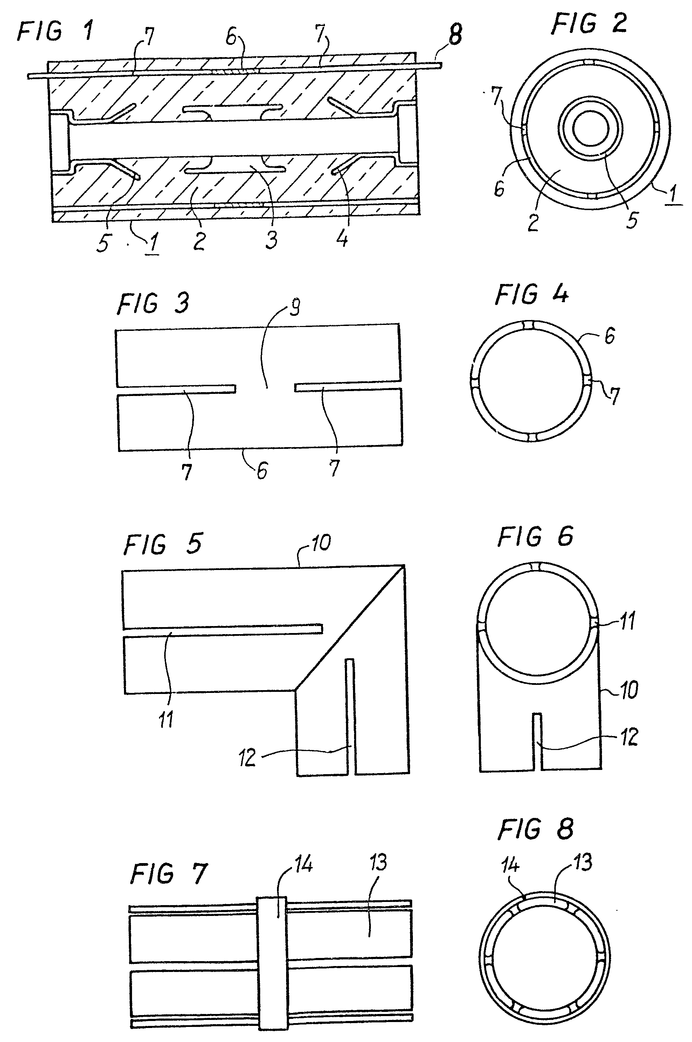

Die Fig. 1, 2 und 19 zeigen zwei Ausführungsbeispiele der neuen Garnitur, während in den Fig. 3 bis 18 verschiedene Ausführungsbeispiele für das im Rahmen der Erfindung verwendete metallische Gehäuse dargestellt sind.

Fig. 1 und Fig. 2 zeigen in Anlehnung an den aus der DE-B-2 726 402 bekannten Muffenkörper zur Herstellung einer Steckmuffe eine Verbindungsgarnitur 1, die im wesentlichen aus dem elastischen Isolierkörper 2 aus Silikonkautschuk und dem metallischen Gehäuse 6 besteht. Der Isolierkörper 2 weist eine Durchgangsbohrung zum Einstecken entsprechend zubereiteter Kabelenden auf; in der Mitte ist ein Abschirmzylinder 3 und an den Enden sind die beiden Deflektoren 4 und 5 aus elektrisch leitfähigem elastischem Material eingebettet.

Das metallische Gehäuse 6 ist rohrförmig ausgestaltet und mit den von den Enden zur Mitte hin verlaufenden Schlitzen 7 versehen. Sowohl auf der rechten als auch auf der linken Seite des metallischen Gehäuses 6 sind jeweils vier Schlitze vorgesehen, die gleichmäßig am Umfang des Gehäuses verteilt angeordnet sind. Von den durch die Schlitze 7 gebildeten Blechstreifen ist an beiden Enden der Verbindungsgarnitur 1 jeweils einer nach außen verlängert, um an diesen Verlängerungen 8 die elektrische Verbindung mit dem Schirm der zu verbindenden Kabel vornehmen zu können.

Das metallische Gehäuse 6 ist in den elastischen Isolierkörper 2 vollständig eingebettet. Hierbei ist vorgesehen, das Gehäuse 6 vor der Einbettung in den Isolierkörper 2 mit einer elektrisch leitenden Schicht aus Silikonkautschuk zu überziehen, die sich bei der Herstellung des Isolierkörpers 2 fest haftend mit diesem Isolierkörper verbindet.

Das metallische Gehäuse 6 ist in den Fig. 3 und 4 in Ansicht sowie im Querschnitt für sich nochmals dargestellt. Dabei ist erkennbar, daß die Schlitze 7 nicht durchgehend ausgebildet sind, sondern etwa in der Mitte des Gehäuses die Unterbrechung 9 aufweisen. Diese Unterbrechung liegt im Bereich geringer elastischer Dehnung des gesamten Garniturenteiles, da im Bereich der etwa in der Mitte angeordneten Verbindungsstelle der Leiter kein Preßsitz des Isolierkörpers 2 auf den zu verbindenden Adern erforderlich ist.

Die Fig. 5 und 6 zeigen ein abgewinkeltes metallisches Gehäuse 10, wie es beispielsweise bei Steckanschlüssen an Transformatoren verwendet werden kann. Entsprechend der knieförmigen Ausgestaltung des Gehäuses laufen die Schlitze 11 parallel zur einen Rohrachse und die Schlitze 12 parallel zur anderen Rohrachse. Im Bereich des Knies sind die Schlitze unterbrochen; im Hinblick auf die komplette Garnitur erfolgt an dieser Stelle die elektrisch leitende Verbindung des anzuschließenden elektrischen Kabels mit dem elektrischen Gerät.

Die Fig. 7 und 8 zeigen ein metallisches Gehäuse, das aus mehreren mit geringem Abstand zueinander auf einer zylindrischen Umfangsfläche angeordneten Blechstreifen 13 besteht. Diese sind mit Hilfe des metallischen Ringes 14 zueinander fixiert und untereinander elektrisch verbunden.

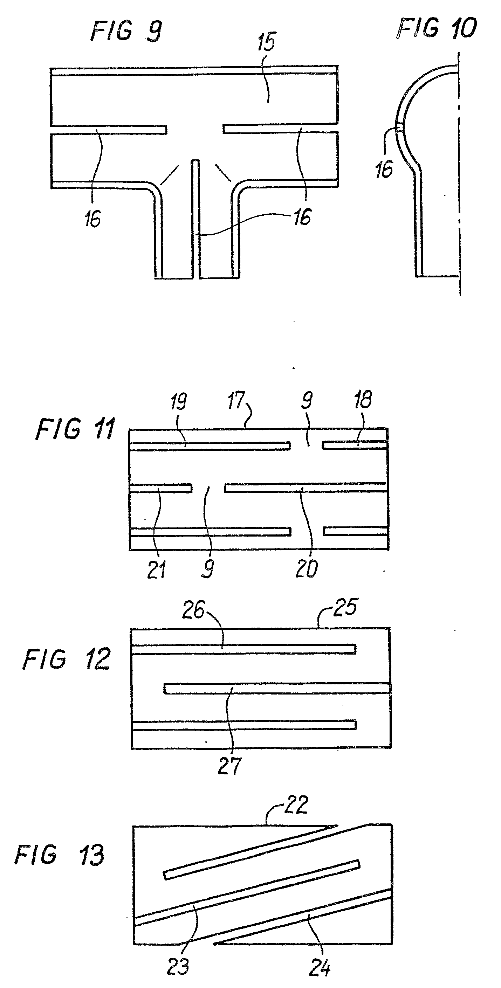

Das in den Fig. 9 und 10 dargestellte Gehäuse besteht aus zwei gleichartigen Halbschalen 15, die mittels nicht näher dargestellter Laschen miteinander verbunden werden. Das Gehäuse ist T-förmig gestaltet und besteht aus tiefgezogenem Blech, wobei parallel zu den Achsen des Gehäuses die Schlitze 16 vorgesehen sind.

Fig. 11 zeigt eine Variante für ein metallisches Gehäuse 17, bei dem die Unterbrechungen 9 der Schlitze 18 und 19 bzw. 20 und 21 in Längsrichtung gegeneinander versetzt angeordnet sind. Auf diese Weise wird auch im Bereich der Unterbrechungen 9 ein in radialer Richtung elastisches Verhalten des Gehäuses 17 erreicht.

Bei dem in Fig. 12 dargestellten Ausführungsbeispiel eines metallischen Gehäuses 25 gehen die Schlitze 26 bzw. 27 jeweils abwechselnd von dem einen bzw. anderen Ende des Gehäuses aus. Die Schlitzunterbrechungen sind dann ebenfalls am Ende des Gehäuses vorgesehen und damit gegeneinander versetzt angeordnet.

Bei dem in Fig. 13 dargestellten Ausführungsbeispiel verlaufen die Schlitze 23 und 24 des Gehäuses 22 nicht parallel, sondern schräg bzw. wendelförmig zur Gehäuseachse.

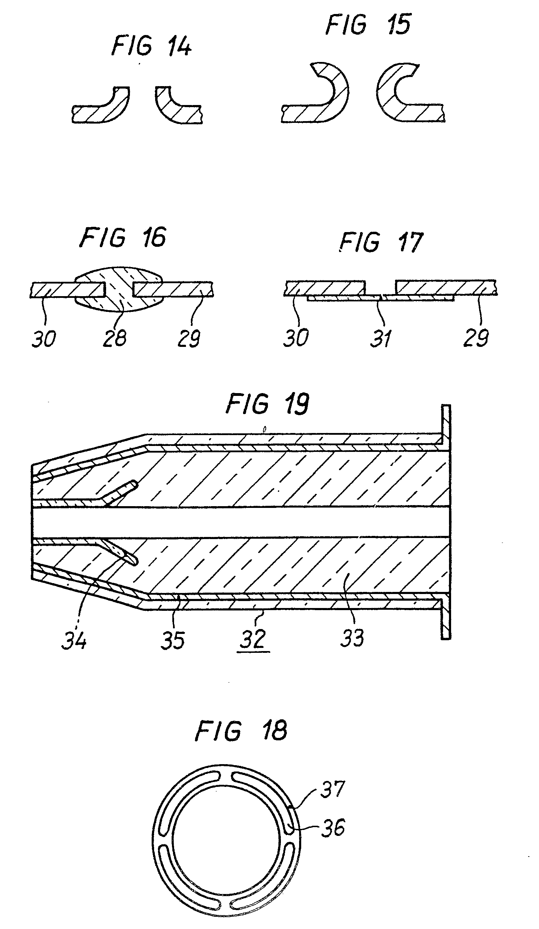

Für den Fall, daß das metallische Gehäuse in den Isolierkörper der Garnitur vollständig eingebettet ist, können von den Schlitzkanten Kerbwirkungen auf den Isolierkörper ausgehen. Um solche nach innen gerichteten Kerbwirkungen zu unterbinden, können die Schlitzkanten umgebördelt sein, wie es in den Fig. 14 und 15 dargestellt ist.

Im Bereich der Schlitze des metallischen Gehäuses ist die elektrische Schirmwirkung des Gehäuses unterbrochen. Wenn die Schlitze genügend schmal sind, wirkt sich dies nicht nachteilig aus. Man kann jedoch die Schlitze elektrisch überbrücken, wie es in den Fig. 16 und 17 dargestellt ist, beispielsweise mit Hilfe eines Formteiles 28 aus elektrisch leitfähigem elastischem Material oder aus elektrisch isolierendem Material mit elektrisch leitender Oberfläche.

Dieses Formteil ist auf die Schlitzkanten 30 und 29 aufgeschoben. Gemäß Fig. 17 kann man auch ein elektrisch leitfähiges und elastisches Band 31, das auch selbstklebend sein kann, auf der Unterseite der Schlitzkanten 30 und 29 anordnen.

Fig. 18 zeigt im Querschnitt ein Gehäuse 36, das aus dem geschlitzten Metallrohr und einer Einbettungsschicht aus elastischem Kunststoff 37 besteht. Das Gehäuse 36 ist demnach vollständig in den elastischen Kunststoff 37 eingebettet. Dieser ist vorzugsweise elektrisch leitfähig ausgebildet. Bei isolierendem Kunststoff kann die Oberfläche der Einbettung mit einer elektrisch leitfähigen Beschichtung versehen sein. Diese Beschichtung kann an den Stirnseiten des Gehäuses mit dem metallischen Gehäuse kontaktiert sein. Bei Verwendung eines elektrisch leitfähigen Kunststoffes 37 für die Einbettungsschicht kann das metallische Gehäuse 36 auch aus einzelnen Blechstreifen bestehen, ohne daß diese durch metallische Ringe untereinander elektrisch leitend verbunden sind.

Fig. 19 zeigt im Querschnitt einen geraden, sich zum Deflektor 34 verjüngenden Steckanschluß 32 mit einem in den elastischen Isolierkörper 33 eingebetteten geschlitzten metallischen Gehäuse 35. Die außerhalb des metallischen Gehäuses 35 befindliche Schicht des Isolierkörpers 33 dient dabei als Korrosionsschutz für das metallische Gehäuse.

Sofern an den Enden der in den Fig. 1 bis 19 dargestellten metallischen Gehäuse infolge entsprechender konstruktiver Ausgestaltungen des elastischen Isolierkörpers auf die radiale Elastizität des Gehäuses verzichtet werden kann, empfiehlt es sich, die Schlitze vor den Enden des Gehäuses enden zu lassen. Die Enden der Gehäuse sind demnach ringförmig gestaltet.

**Patentansprüche**

1. Garnitur für kunststoffisolierte elektrische Kabel, insbesondere Mittel- und Hochspannungskabel, bestehend aus einem elastischen, vorgefertigten, mit einer elastisch aufweitbaren Bohrung versehenen und gegebenenfalls ein Verbindungselement enthaltenden Isolierträger (2; 33) mit einem rohrförmigen metallischen Gehäuse (6; 10; 13; 17; 22; 25; 35; 36), dadurch gekennzeichnet, daß das rohrförmige Gehäuse (6, 10; 13; 17; 22; 25; 35; 36) aus Metallblech besteht und in direktem Kontakt mit dem Isolierkörper (2; 33) steht sowie parallel oder schräg zur Gehäuseachse ein- oder mehrfach geschlitzt (7; 11; 12; 16; 18, 19, 20, 21; 23, 24; 26, 27) ist.

2. Garnitur nach Anspruch 1, dadurch gekennzeichnet, daß der oder die Schlitze (7; 18, 19, 20, 21) ein- oder mehrfach unterbrochen sind.

3. Garnitur nach Anspruch 1 oder 2, dadurch gekennzeichnet, daß die Schlitze (7) gleichmäßig am Umfang des rohrförmigen Gehäuses (6) verteilt angeordnet sind.

4. Garnitur nach einem der Ansprüche 1 bis 3, dadurch gekennzeichnet, daß die Schlitzenden von in Umfangsrichtung des rohrförmigen Gehäuses (25) nebeneinanderliegenden Schlitzen (26, 27) in Achsrichtung gegeneinander versetzt angeordnet sind.

5. Garnitur nach einem der Ansprüche 1 bis 4, dadurch gekennzeichnet, daß das Gehäuse aus mehreren mit Abstand zueinander angeordneten Blechstreifen (13; 36) besteht.

6. Garnitur nach Anspruch 5, dadurch gekennzeichnet, daß die Blechstreifen (13) durch einen oder mehrere metallische Ringe (14) untereinander mechanisch und elektrisch verbunden sind.

7. Garnitur nach einem der Ansprüche 1 bis 6, dadurch gekennzeichnet, daß der oder die Schlitze wenigstens auf der Innenseite des Gehäuses mittels eines elektrisch leitenden elastischen Kunststoffes (37) elektrisch überbrückt sind.

8. Garnitur nach Anspruch 7, dadurch gekennzeichnet, daß die elektrisch leitende Überbrükkung aus einer rohrförmigen elektrisch leitenden Schicht (37) besteht.

9. Garnitur nach einem der Ansprüche 1 bis 8, dadurch gekennzeichnet, daß das rohrförmige Gehäuse (35) in den Isolierkörper (33) eingebettet ist.

10. Garnitur nach Anspruch 9, dadurch gekennzeichnet, daß die äußere Schicht des Isolierkörpers aus einem elektrisch leitenden elastischen Kunststoff besteht und daß das rohrförmige Gehäuse (36) in diese Schicht (37) des Isolierkörpers eingebettet ist.

11. Garnitur nach einem der Ansprüche 1 bis 10, dadurch gekennzeichnet, daß die Oberfläche des rohrförmigen Gehäuses mit einem Korrosionsschutz versehen ist.

12. Garnitur nach einem der Ansprüche 1 bis 11, dadurch gekennzeichnet, daß das rohrförmige Gehäuse mit dem Isolierkörper mittels eines Haftvermittlers verklebt ist.

13. Garnitur nach einem der Ansprüche 1 bis 12, dadurch gekennzeichnet, daß das rohrförmige metallische Gehäuse nach Art eines T-Stükkes (Fig. 9) oder eines Kniestückes (Fig. 5) ausgebildet ist.

14. Garnitur nach Anspruch 13, dadurch gekennzeichnet, daß das metallische Gehäuse aus zwei Halbschalen (15) besteht (Fig. 9).

**Claims**

1. A fitting for plastic-insulated electric cables, in particular medium-voltage and high-voltage cables, consisting of a prefabricated, flexible insulating body (2; 22) which is provided with an elastically-expandable bore, and which may include a connection element and has a tubular metal housing (6; 10; 13; 17; 22; 25; 35; 36), characterised in that the tubular housing (6; 10; 13; 17; 22; 25; 35; 36) consists of sheet metal, is in direct contact with the insulating body (2; 33) and is provided with one or more slots (7; 11; 12; 16; 18; 19; 20; 21; 23; 24; 26; 27) parallel or obliquely to the housing axis.

2. A fitting as claimed in Claim 1, characterised in that the slot or slots (7; 18; 19; 20; 21) is or are interrupted one or more times.

3. A fitting as claimed in Claim 1 or Claim 2, characterised in that the slots (7) are uniformly distributed at the periphery of the tubular housing (6).

4. A fitting as claimed in one of Claims 1 to 3, characterised in that the ends of the slots (26, 27) which are arranged beside one another in the peripheral direction of the tubular housing (25), are staggered relative to one another in the axial direction.

5. A fitting as claimed in one of Claims 1 to 4, characterised in that the housing consists of a plurality of sheet-metal strips (13; 36) which are spaced from one another.

6. A fitting as claimed in Claim 5, characterised in that the sheet-metal strips (13) are mechanically and electrically interconnected by one or more metal rings (14).

7. A fitting as claimed in one of Claims 1 to 6, characterised in that the slot or slots is or are electrically bridged, at least on the inside of the housing, by means of an electrically-conductive, elastic synthetic resin (37).

8. A fitting as claimed in Claim 7, characterised in that the electrically-conductive bridging consists of a tubular electrically-conductive layer (37).

9. A fitting as claimed in one of Claims 1 to 8, characterised in that the tubular housing (35) is embedded in the insulating body (33).

10. A fitting as claimed in Claim 9, characterised in that the outer layer of the insulating body consists of an electrically-conductive elastic synthetic resin and that the tubular housing (36) is embedded in this layer (37) of the insulating body.

11. A fitting as claimed in one of Claims 1 to 10, characterised in that the surface of the tubular housing is provided with protection against corrosion.

12. A fitting as claimed in one of Claims 1 to 11, characterised in that the tubular housing is stuck to the insulating body by means of an adhesive.

13. A fitting as claimed in one of Claims 1 to 12, characterised in that the tubular metall housing is in the form of a T-piece (Fig. 9) or an elbow (Fig. 5).

14. A fitting as claimed in Claim 13, characterised in that the metal housing consists of two half shells (Fig. 9).

**Revendications**

1. Garniture pour câbles électriques isolés par une matière synthétique, notamment câbles à moyenne et haute tension, constituée par un corps isolant (2; 33) élastique préfabriqué muni d'un perçage pouvant s'élargir élastiquement et contenant éventuellement un élément de couplage, avec un boîtier métallique tubulaire (6; 10;

13; 17; 22; 25; 35; 36), caractérisée par le fait que le boîtier tubulaire (6; 10; 13; 17; 22; 25; 35; 36) est constitué par une tôle métallique et est en contact direct avec le corps isolant (2; 33), et est également fendu une ou plusieurs fois (7; 11; 12; 16; 18, 19, 20, 21; 23, 24; 26, 27) parallèlement ou obliquement par rapport à l'axe du boîtier.

2. Garniture suivant la revendication 1, caractérisée par le fait que la ou les fentes (7; 18, 19, 20, 21) sont interrompues une ou plusieurs fois.

3. Garniture suivant la revendication 1 ou 2, caractérisée par le fait que les fentes (7) sont réparties uniformément sur la périphérie du boîtier tubulaire (6).

4. Garniture suivant l'une des revendications 1 à 3, caractérisée par le fait que les extrémités de fentes (26, 27) situées les unes à côté des autres suivant la direction périphérique du boîtier tubulaire (25) sont décalées les unes par rapport aux autres suivant la direction axiale.

5. Garniture suivant l'une des revendications 1 à 4, caractérisée par le fait que le boîtier est constitué par plusieurs bandes de tôle (13; 36) disposées à une certaine distance les unes des autres.

6. Garniture suivant la revendication 5, caractérisée par le fait que les bandes de tôle (13) sont réunies mécaniquement et électriquement entre elles par une ou plusieurs bagues métalliques (14).

7. Garniture suivant l'une des revendications 1 à 6, caractérisée par le fait que la ou les fentes sont pontées électriquement au moins sur la face intérieure du boîtier, au moyen d'une matière synthétique élastique (37) conductrice du point de vue électrique.

8. Garniture suivant la revendication 7, caractérisée par le fait que le pontage conducteur du point de vue électrique est constitué par une couche (37) de forme tubulaire conductrice du point de vue électrique.

9. Garniture suivant l'une des revendications 1 à 8, caractérisée par le fait que le boîtier tubulaire (35) est noyé dans le corps isolant (33).

10. Garniture suivant la revendication 9, caractérisée par le fait que la couche extérieure du corps isolant est constituée par une matière synthétique élastique conductrice du point de vue électrique et que le boîtier tubulaire (36) est noyé dans cette couche (37) du corps isolant.

11. Garniture suivant l'une des revendications 1 à 10, caractérisée par le fait que la surface du boîtier tubulaire est munie d'une protection anti-corrosive.

12. Garniture suivant l'une des revendications 1 à 11, caractérisée par fait que le boîtier tubulaire est collé avec le corps isolant au moyen d'un agent de pontage.

13. Garniture suivant l'une des revendications 1 à 12, caractérisée par le fait que le boîtier métallique tubulaire se présente sous la forme d'une pièce en T (figure 9) ou d'une pièce coudée (figure 5).

14. Garniture suivant la revendication 13, caractérisée par le fait que le boîtier métallique est constitué par deux demi-coques (15) (figure 9).

FIG 1

FIG 2

FIG 3

FIG 4

FIG 5

FIG 6

FIG 7

FIG 8

7

FIG 9

15

16    16

16

FIG 10

16

FIG 11

19    17    9    18

21    9    20

FIG 12

26    25

27

FIG 13

22

23    24

FIG 14

FIG 15

FIG 16

30 28 29

FIG 17

30 31 29

FIG 19

34 35 32 33

FIG 18

37 36